# EUROPEAN PATENT APPLICATION

(11) **EP 4 550 142 A1**
(43) Date of publication of application: **07.05.2025**
(21) Application number: 23208394.9
(22) Date of filing: 07.11.2023
(51) Int. Cl.: G06F 9/50, G06N 20/00

(54) **A CLOUD-BASED DATA PROCESSING SYSTEM**

(30) Priority: 03.11.2023 PT 2023119022
(71) Applicant: NOS Inovação, S.A., 4460-191 Senhora da Hora (PT)
(72) Inventor: PINTO SEQUEIRA DOS SANTOS GRAÇA, Jorge Filipe, 4460-191 Senhora da Hora, Porto (PT); NUNES FERREIRA, João Miguel, 4460-191 Senhora da Hora, Porto (PT); TIDÓ, Emanuele, 4460-191 Senhora da Hora, Porto (PT); COUTINHO DE SOUSA, Joana, 4460-191 Senhora da Hora, Porto (PT)
(74) Representative: do Nascimento Gomes, Rui

(57) **Abstract**

It is described a cloud-based data processing system for streamlining the integration of training datasets (1b) and models, that may be provided by a first and a second entities. It comprises a Collaborative Docker Register (4) comprising a management computational engine for receiving training container images (4a) from the second entity and for storing said images in the register before being executed by a training containerized application (2.1), to generate inference models (2a). The image (4a) includes a training script having as input arguments, an address to upload a training dataset (1b) owned by the first entity and an address to where an inference model (2a) is to be stored. Consequently, inference data provided by the first and second entities may be integrated without either of them directly sharing the respective inference data, safeguarding the security and privacy of said data.

## Description

### FIELD OF THE APPLICATION

The present application relates, in general, to data processing and, in particular, to systems and methods for implementing data uploading, processing, training and inference in a cloud computing infrastructure.

### PRIOR ART

Artificial intelligence is a vast and complex field of technology that covers multiple areas of knowledge. For this reason, the development of projects in this field normally involves cooperation between several entities, which may or may not belong to the same parent entity but which have different skills, and each being responsible for the development of different parts of a project. However, this collaboration may mean having to share sensitive data that, due to legal, security or privacy restrictions, should not be shared between entities with different levels of access permission assigned.

This limitation is particularly relevant in the context of an inference process, where normally the entity holding the training datasets is not the same entity that develops the models to be trained and later used for performing inference. In fact, a training dataset in the majority of the cases refers to sensitive data, that requires special data protection strategies and processes to secure its privacy, availability and integrity. The high level of security applied to this type of data may prevent or restrict at different levels the sharing of training datasets directly with other entities involved in an inference process.

A similar concern has an entity holding a model to be trained, since the development of such model may represent a product resulting from the intellectual activity of that entity. For this reason, they may not be interested in sharing the respective source code, without safeguarding their rights as creators.

Consequently, these restrictions may create a significant obstacle to the development of an inference process, since its result is obtained by incorporating inference data that may be obtained from several different entities.

To address this challenge, it is necessary to develop a solution that allows for the integration of inference data provided by multiple entities, safeguarding any security and/or privacy issues associated with said data, thus, streamlining the inference process.

The present solution intended to innovatively overcome such issues.

### SUMMARY OF THE APPLICATION

It is therefore an object of the present application a data inference processing system configured to collect, process, train and infer data in a cloud computing infrastructure.

The system comprises a containerization platform implemented on a cloud computing infrastructure and configured to run containerized applications, more particularly, training and inference containerized applications. It is important to note that the computational requirements for inference are different from those for training. Therefore, it is advantageous to set up two containerized applications - one for training and another for inference. This will ensure that the specific requirements for each process are met without compromising the performance of either. By separating the training and inference processes, it will be easier to manage the resource allocation, and avoid any conflicts that could arise due to different resource requirements for the two processes.

In a first innovative aspect of the system described in the present application, it is comprised by a data ingestion unit, a training unit and an inference unit. The data ingestion unit is responsible for receiving raw training data from a first entity and for generating training datasets based on said raw training data. The training unit comprises a training containerized application configured to execute a training container image programmed to train models of a second entity with training datasets of the first entity, thereby generating inference models. Finally, the inference unit comprises an inference containerized application configured to execute an inference container image programmed to process input data, contained in an inference request, according to an inference model, thereby producing an inference result.

In connection with the first innovative aspect, in a second innovative aspect of the system, it is further comprised by a Collaborative Docker Registry comprising storage means to store training and inference container images, and a management computational engine configured to receive a training container image, to be transmitted by the second entity involved in the inference process, and to store said training container image in the Collaborative Docker Registry. The training container image to be developed and transmitted by the second entity to the management computation engine, comprises container image data including, in addition to the executable code needed to execute said container image data, a training script, representing the model to be trained, having as input arguments i.) an address to upload the training dataset of the first entity and ii.) an address to where the inference model, resulting from model training, is to be stored.

The integration between inference data provided by the first and second entities, that is, training datasets and models, is carried out without either of them directly sharing the respective inference data, safeguarding the security and privacy of said data. This advantage is achieved through the special configuration of a training container image, that is developed by the second entity and subsequently transmitted to the management computational engine, which stores it in the Collaborative Docker Registry, before being executed by the training containerized application in a training instance.

In fact, the system developed incorporates changes to the scheme and operating principles of state-of-the-art containerization platforms, in order to create a privacy mechanism that guarantees training of models in an inference process without **the entities involved having direct access to each other's inference data.** That is to say, the model of a second entity is trained without a first entity having to transmit or temporally transfer its training dataset to the second entity. Likewise, the training script developed by the second entity, representing the model to be trained, may be executed without the first entity, owner of the training dataset, having to have access to it.

To achieve these advantages, the system shall be based on a containerized platform, allowing training containerized applications to be deployed independently of the programming language of the training script or the container image data included in the respective training container image.

The developed system therefore streamlines the integration of inference data, that may be provided by different entities contributing to an inference process, safeguarding any security and/or privacy issues associated with said data.

### DESCRIPTION OF FIGURES

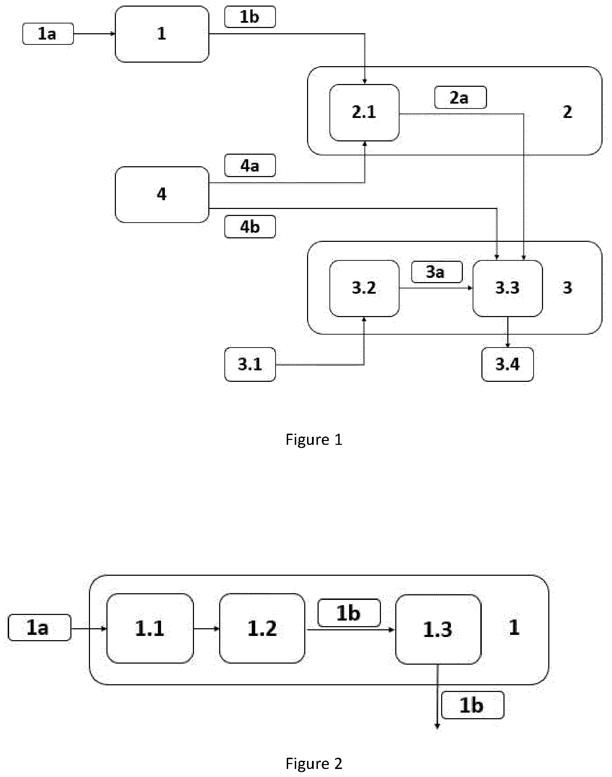

Figure 1- representation of an embodiment of the data processing system described in the present application. The reference signals represent:
   1 - data ingestion unit;
   1a - raw training data transmitted by a first entity
   1b -training dataset of the first entity;
   2 -training unit;
   2.1 -training containerized application;
   2a -inference model;
   3 - inference unit;
   3.1 - inference request;
   3.2 - input request module;
   3a - input data;
   3.3 - inference containerized application;
   3.4 - inference result
   4-Collaborative Docker Registry;
   4a -training container image;
   4b - inference container image.
Figure 2 - representation of an embodiment of the data ingestion unit of the system described in the present application. The reference signals represent:
   1 - data ingestion unit;
   1a - raw training data transmitted by a first entity;
   1.1 - input module;
   1.2 - processing module;
   1.3 -training data storage module;
   1b - training dataset of the first entity.
Figure 3 - representation of an embodiment of the training unit of the system described in the present application. The reference signals represent:
   2 -training unit;
   2.1 -training containerized application;
   2a -inference model;
   2.2 -trained model storage module.
Figure 4 - representation of an embodiment of the system described in the present application, illustrating the connection between the data inference unit and the data ingestion unit. The reference signals represent:
   1 - data ingestion unit;
   1a - raw training data transmitted by a first entity;
   1.1 - input module;
   1.2 - processing module;
   1.3 -training data storage module;
   1b - training dataset of the first entity.
   2a -inference model;
   3 - inference unit;
   3.1 - inference request;
   3.2 - input request module;
   3a - input data;
   3.2.1 - data processing module of the inference unit;
   3b - refined input data;
   3.3 - inference containerized application;
   3.4 - inference result
   4b - inference container image.

### DETAILED DESCRIPTION

The more general and advantageous configurations of the system described in the present application are described in the Summary of the application. Such configurations are detailed below in accordance with other advantageous and/or preferred embodiments of implementation of the system.

The present application relates to a data processing system to collect, process and infer data in a cloud computing infrastructure. The purpose underlying the development of such system is to streamline the integration of inference data that may be provided by different entities contributing for the inference process. More particularly, the developed system aims to make the different entities involved in the inference process to interact, in a simplified and safe manner, guaranteeing the protection and privacy of inference data.

These advantages are achieved by creating a privacy mechanism that guarantees the execution of inference models (2a) in an inference process without the entities involved having to directly share with each other inference data.

In the context of the present application, an entity is an inference data provider, that is responsible for feeding the system with inference data to be used in the inference process, i.e., models and training datasets used to train said models. The entities may or may not belong to a same parent-entity (or organization), and each may have assigned different levels of access permission to the inference data. Throughout this application, the entity or entities responsible for providing training datasets (1b) for training models, will be referred to as first entity. On the other hand, the entity or entities responsible developing models to be trained using the training datasets (1b), will be referred to as second entity.

In a preferred embodiment of the system, it comprises a data ingestion unit (1), a training unit (2) and an inference unit (3).

The data ingestion unit (1) may operate as an interface platform for receiving and storing training data (1a, 1b) transmitted by a first entity, ensuring that a second entity, responsible for developing a training container image (4a) used to train a model, does not have access to it, thus safeguarding privacy and security restrictions that may apply to training datasets (1b). For that purpose, the data ingestion unit (1) comprises an input module (1.1), configured to receive, from a first entity, raw training data (1a), and a processing module (1.2), that is programmed to process said raw training data (1a) in order to generate training datasets (1b), that are subsequently stored in a training data storage module (1.3). These modules, constituting the data ingestion unit (1), collaboratively establish a robust foundation for data ingestion, setting the stage for an efficient and effective inference process.

The training unit (2) is responsible for executing the training phase of an inference process. More particularly the training unit (2) comprises a training containerized application (2.1) configured to run a training container image (4a) programmed to train a model of the second entity, with a training dataset (1b) owned by the first entity, thereby generating an inference model (2a).

The training unit (1) is further comprised by a trained model storage module (2.2) to store inference models (2a) generated by training containerized application instances. The integration between inference data provided by the first and second entities, that is, training datasets (1b) and models respectively, is carried out without either of them directly sharing the respective inference data, safeguarding the security and privacy of said data. This is particularly relevant during the training phase of an inference process, where a model of the second entity is to be trained using a training dataset (1b) of the first entity. This is achieved through the configuration of the training container image (4a), which is developed by the second entity and transmitted to the management computational engine of the Collaborative Docker Registry (4) in order to be stored and subsequently executed by the training containerized application (2.1).

In particular, the training container image (4a) comprises container image data including **a training script, representing the second entity's model, and having as** input arguments i.) an address to upload the training dataset (1b) owned by the first entity and ii.) an address to where the inference model (2a), resulting from the execution of a training containerized application instance, is to be stored. In this way the model and the respective training script developed by the second entity is trained without having direct access to the training dataset (1b) owned by the first entity. Likewise, the training script developed by the first entity, representing the model to be trained, may be executed without the first entity, owner of the training dataset (1b), having to access to it, thus safeguarding privacy and security restrictions that may apply to both models and training datasets (1b).

The inference unit (3) is responsible for executing the inference phase of an inference process. More particularly, the inference unit (3) comprises an inference request input module (3.2) that is configured to receive an inference request (3.1) submitted by a user, and which contains input data (3a). For this purpose, the inference request input module (3.2) may be a computational interface platform adapted to establish a communication interface with the user for receiving inference requests (3.1). The inference unit (3) further comprises an inference containerized application (3.3) configured to run an inference container image (4b) programmed to process said input data (3a), according to an inference model (2a), in order to generate an inference result (3.4). Additionally, the inference unit may further comprise an output module adapted to transmit the inference result (3.4) to the user.

The system is based on a cloud computing infrastructure, which is adapted to implement a containerized platform. This is particularly relevant, since it allows to deploy training containerized applications (2.1) independently of the programming language of the training script or the container image data included in the respective training container image (4a) and, in addition, it allows the execution of container images (4a, 4b), by a containerized application (2.1, 3.3), directly without having to provide the respective source code.

More particularly, a containerized application (2.1, 3,3) is an application that runs in isolated packages of code, called containers. Therefore, a container is a single lightweight executable including all the dependencies that an application might need to run on any host cloud computing infrastructure, such as libraries, binaries, configuration files, and frameworks. A container is dependent on a container image (4a, 4b) which is a static file with executable code used to build the container on the host cloud computing infrastructure. In other words, the container uses the container image (4a, 4b) to construct a run-time environment and to run an application instance. Thus, a training containerized application (2.1), as well as an inference containerized application (3.3), represents an autonomous computing environment, which is controlled by the containerized platform, allowing the execution of training container images (4a), as well as of inference container images (4b), to be done automatically and without involvement from the first or second entities. That is, when a training containerized application instance is started, the respective training script is automatically executed, to access the training dataset (1b) presented as an input argument in order to train the respective model. The resulting inference model (2a), is stored in the specific address **configured as input argument of the training container's image training script.**

A container image (4a, 4b) is immutable, meaning that it cannot be changed and can be deployed consistently in any computational environment. It may be assembled using a text-based file that contains a script of instructions. In order to deploy containerized applications (2.1, 3.3) a Docker platform may be used, and in this case the container image (4a, 4b) may be assembled using a Dockerfile which represents the **container image's source code. More specifically,** a Dockerfile is a text file that contains a set of information, adhering to a specific set of instructions and format, that is needed to assemble a container image (4a, 4b).

In the context of the present application, inference data relates to data used in the inference process, referring to at least models and training datasets (1b) used to train said models. When inference data is owned by different entities, security and privacy issues related to that data can hamper the required integration. In this context, the developed system provides an integration platform between entities involved in the inference process, projected so that each one can share their contribution in a simplified and safe manner. In fact, the system may be used to streamline the integration of models developed by the second entity, so that they can be trained with a specific training dataset (1b) owned by the first entity and subsequently used to perform inference on input data sent by a user, while safeguarding security and privacy requirements related to said inference data. In the mentioned scenario, the training container image (4a) to be run by the training containerized application (2.1) makes the training datasets (1b) owned by the first entity accessible by sharing, a respective address from where the training dataset (1b) can be uploaded. This is particularly relevant since the training of the model, performed by the training containerized application (2.1), is implemented without having to load the training dataset (1b) directly into the training script, responsible for the model training process, prior to executing the respective training container image (4a). Instead, the training script, contained in the training container image (4a), which is developed by the second entity, is projected to have as an input argument the address from which the training dataset of the first entity (1b) can be retrieved. In this way, the second entity responsible for developing the model and its corresponding training container image (4b) and training script, will not have access to the training dataset (1b) owned by the first entity. In addition, the Collaborative Docker Registry (4) and the respective management computational engine ensures the storage and management of container images (4a, 4b), that will be subsequently executed by the respective containerized applications (2.1, 3.3).

A training dataset (1b) shall be understood as a collection of related sets of information that may be composed of separate elements that are manipulated as a unit by a processor. The type and nature of the information constituting the training dataset (1b) is irrelevant to the description of the technical features defining the system object of this application, however, and as a practical example of implementation, the training dataset (1b) can bring together operation, configuration or activity history data (among others) collected from electronic devices, such as smartphones, routers or loT devices.

Also in the context of the present application, an inference model is a computational model adapted to make predictions, in the inference phase of an inference process, that may then produce actionable results (3.4), based on input data (3a) transmitted by a user. To this end, the inference model has to undergo a training phase, prior to the inference phase, where it is fed with a curated dataset, a training dataset, in order to learn about the type of data that will be analysed in the subsequent inference phase. Therefore, in the present text, the term "model" is used to refer to a model to be trained in the training phase of an inference process. On the other hand, the term "inference model" is used to refer to the trained model, resulting from the training phase, and which is to be used in the inference phase of the inference process.

### EMBODIMENTS

In a preferred embodiment of the system described in the present application, it comprises a containerization platform implemented on a cloud computing infrastructure and configured to run containerized applications. As illustrated by figure 1, the system may comprise:
- a data ingestion unit (1), configured to receive raw training data (1a) from a first entity and to generate training datasets (1b) based on said raw training data (1a);
- a training unit (2), comprising a training containerized application (2.1), configured to execute a training container image (4a) programmed to train a model of a second entity, with a training dataset (1b) of the first entity, thereby generating an inference model (2a);
- an inference unit (3), comprising an input request module (3.2) for receiving inference requests (3.1), each request comprising input data (3a); and an inference containerized application (3.3), configured to execute an inference container image (4b) programmed to process input data (3a) according to an inference model (2a), thereby producing an inference result (3.4); and
- a Collaborative Docker Registry (4) adapted to store training and inference container images (4a, 4b) and comprising a management computational engine configured to receive a training container image (4a) to be transmitted by the second entity and to store said training container image (4a) in the Collaborative Docker Registry (4).

In addition, the training container image (4a) comprises container image data including:
- a training script having as input arguments i.) an address to upload a training dataset (1b), and ii.) an address to where the inference model (2a) is to be stored; and
- executable code configured to execute container image data.

The configuration of the training container image (4a), to be executed by the training containerized application (2.1), makes the training datasets (1b) owned by the first entity accessible by sharing a respective address from where the training dataset (1b) can be uploaded. This is particularly relevant since the training of the model, performed by the training containerized application (2.1), is implemented without having to load the training dataset (1b) directly into the training script, responsible for the model training process, prior to executing the respective training container image (2.1). This is achieved by programming the training script, contained in the training container image (4a) developed by the second entity, to have as an input argument the address from which the training dataset (1b) can be uploaded.

Therefore, the system now developed creates a privacy mechanism that guarantees the training of models without the entities involved having to directly share with each other inference data. The management and storage of the training container image (4a) in the Collaborative Docker Registry (4) is performed by the management computational engine, ensuring that the container image (4a) during the training phase, as well as the inference container image (4b) during the inference phase, are automatically executed by the respective containerized applications (2.1, 3.3) and without direct intervention of any of the entities. More particularly, the model and respective training script developed by the second entity is trained without having direct access to the training dataset (1b) owned by the first entity. Likewise, the training script developed by the second entity, representing the model to be trained, may be executed without the first entity, owner of the training dataset (1b), having to access to it, thus safeguarding privacy and security restrictions that may apply to both models and training datasets (1b). In fact, the training containerized application (2.1), which executes the training container images (4a) represents an autonomous computing environment, which is controlled by the containerized platform. That is, when a training containerized application instance is started, the respective training script is automatically executed, to access the training dataset (1b) presented as an input argument in order to train the respective model.

In one embodiment of the system, illustrated by figure 2, the data ingestion unit (1) comprises:
- an input module (1.1) adapted to receive raw training data (1a) from the first entity;
- a processing module (1.2) programmed to process raw training data (1a) in order to generate training datasets (1b);
- a training data storage module (1.3) comprising storage means adapted to store training datasets (1b).

More particularly, the training containerized application (2.1) is configured to generate an inference model (2a) by executing a training container image (4a) programmed to train a model with a training dataset (1b) to be uploaded from the training data storage module (1.3). These modules, constituting the data ingestion unit (1), collaboratively establish a robust foundation for data ingestion, setting the stage for an efficient and effective inference process.

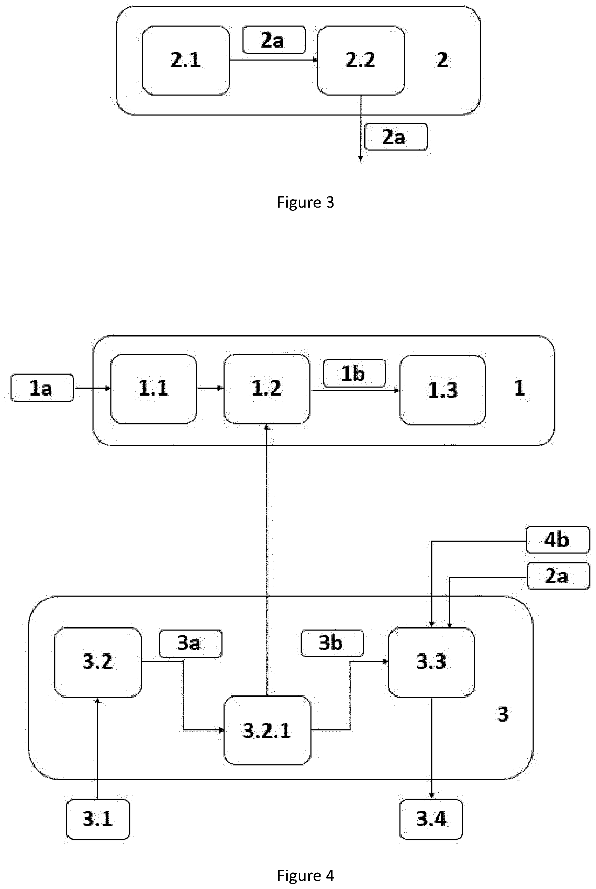

In another embodiment of the system, illustrated by figure 3, the training unit (2) further comprises a trained model storage module (2.2), comprising storage means adapted to store inference models (2a). According to this embodiment, the inference containerized application (3.3) is configured to produce the inference result (3.4) by executing an inference container image (4b) programmed to process input data (3a) according to an inference model (2a) to be uploaded from the trained model storage module (2.2).

The training data storage module (1.3) and the trained model storage module (2.2) may be data storage structures comprised by multiple entries, each entry containing storage means and a respective entry address. More particularly, an entry of the training data storage module (1.3) is adapted to store a training dataset (1b), and the respective entry address is usable to upload said training dataset (1b). In its turn, an entry of the trained model storage module (2.2) is adapted to store an inference model (2a), and the respective entry address is usable to store and upload said inference model (2a).

In another embodiment of the system, the data storage structure representing the training data storage module (1.3) and the trained model storage module (2.2) is a directory service, and the entry address is a directory path. Additionally, the system may further comprise a computational agent programmed to assemble a container image (4a, 4b) based on a Dockerfile comprised by a set of instructions and input arguments. Said computational agent is programmed to assemble a training container image (4a) based on a training Dockerfile, that comprises:
- **an instruction declaring a training script as a Dockerfile's ENTRYPOINT;**
- the training script comprising the following input arguments:
- a directory path of the training data storage module (1.3) entry containing the training dataset (1b) to be uploaded; and
- a directory path of the trained model storage module (2.2) entry, where the inference model (2a) is to be stored.

The ENTRYPOINT is a specific instruction that is used to configure an executable that always runs after a containerized application (2.1, 3.3) is initiated.

In another embodiment of the system, the computational agent is programmed to assemble an inference container image (4b) based on an inference Dockerfile; and the inference Dockerfile comprises:
- **an instruction declaring as input arguments of a Dockerfile's Endpoint:**
   - the input data contained in the inference request (3.1); and
   - a directory path of the trained model storage module (2.2) entry containing the inference model (2a) to be uploaded;
- **an instruction declaring as an output argument of the Dockerfile's Endpoint:**
   - the inference result (3.4).

The Dockerfile Endpoint provides an execution environment for Continuous Integration tasks and Custom Integrations, which are executed inside an inference container image (4b).

In another embodiment of the system, the training unit (2) further comprises a management module configured to trigger the execution of a training containerized application instance based on predefined schedule. The management module may also be configured to trigger the execution of a training containerized application instance based on a predefined number of new training dataset (1b) entries in the training data storage module (1.3). The management module serves as the command center for initiating the entire training process. It ensures the commencement of new training cycles automatically, enabling Continuous Integration/Continuous Deployment practices.

In addition, the management module may also implement a status scheduler adapted to monitor the status of the training containerized application instance being executed. More particularly, the status scheduler may be adapted to periodically check the status of the training containerized application instance and to return its current status. If the training instance has completed the training process, the management module may stop the status scheduler and stores the resulting training files (2a). On the other hand, if the training containerized application instance is still running, the status scheduler continues to monitor the status until the training process is completed.

In another embodiment of the system, the processing module (1.2) of the data ingestion unit (1) is configured to process raw training data (1a) using data mining algorithms, in order to process a set of key features. Said data mining algorithms may be feature extraction algorithms or feature selection algorithms. This approach allows saving storage space and reduces processing demands at later stages of the inference process, since the training datasets (1b) stored in the training data storage module (1.3) are formed by key features that are essential for the training and inference process. Therefore, this processing stage implemented in the processing module (1.2) of the data ingestion unit (1) is essential to optimize training dataset storage efficiency, since only key features are capture, forming the training datasets (1b) to be stored in the training data storage module (1.3). Additionally, the inference unit (3) may further comprise a data processing module (3.2.1) configured to process input data (3a) using data mining algorithms, in order to process the set of key features identified by the processing module (1.2) of the data ingestion unit (1), thereby generating refined input data (3b). This processing stage allows the inference process to be carried out with a treated set of input data (3b) which is optimized for the inference model (2a) that will digest it. More particularly, the inference containerized application (3.3) is configured to produce the inference result (3.4) by executing an inference container image (4b) programmed to process refined input data (3b) according to an inference model (2a) to be uploaded from the trained model storage module (2.2). Additionally, in another embodiment of the system, the processing module (1.2) of the data ingestion unit (1) is configured to expand a training dataset (1b) by incorporating the set of key features identified by the processing module (3.2.1) of the inference unit (3). The resulting augmented training dataset (1b) may subsequently enhance the model training process executed in the training containerized application (2.1). The integration between data ingestion unit (1) and inference unit (3) is illustrated by figure 4.

The processing module (1.2) of the data ingestion unit (1) may be further programmed to perform data separation on training datasets (1b), according to a predefined train-validation-test ratio. Typically, train-validation-test ratio is 70% training data, 10% validation data and 20% test data. More particularly, the training set is the portion of the dataset reserved to fit the model. The validation set is the set of data used to evaluate and fine-tune the model during training, helping to assess the model's performance and make adjustments. Finally, the test set is the set of data used to evaluate the final performance of a trained model. This ensures the generalizability of the inference model (2a), allowing to measure its performance by ensuring that the dataset used to train the model and the dataset used to evaluate it are distinct.

In another embodiment of the system, the container image data of a training container image (4a) may further include an encryption function configured to encrypt the training container image (4a) using encryption keys managed by the second entity. This allows to configure an extra level of security against unauthorized third-party access to the Collaborative Docker Registry (4), which safeguards the protection of container image data included in training container images (4a) that are stored.

In another embodiment of the system, it further comprises a versioning unit, configured to assign a unique version identification code to each:
- inference model (2a) generated by a training containerized application instance of the training unit (2); and
- Training dataset (1b) generated by the data ingestion unit (1).

This unit allows to track and control changes applied to inference data, as **well as to measure models' performance metrics that may be used to select the most** appropriate model for each case.

In another embodiment of the system, wherein the containerized platform further comprises a container orchestrator configured to deploy and scale:
- training containerized applications (2.1); and
- inference containerized applications (3.3).

The container orchestrator may comprise a manager engine comprising processing means programmed to:
- set a number of instances per containerized application (2.1, 3.3) to be executed, preferably to set the maximum and minimum number of instances per containerized application (2.1, 3.3); and to allocate memory and CPU or GPU **cloud computing infrastructure's resources, for each containerized application** instance;
- start the execution of a training containerized application instance; and
- manage received inference requests and start the execution of at least one inference containerized application instance;

More particularly, the manager engine is configured to set, for a training containerized application (2.1):
- the maximum number of instances to 1 and the minimum number of instances to 0;
- CPU or GPU allocation to always allocated; and
- memory allocation based on the size of the training dataset (1b),
and for an inference containerized application (3.3), to:
- scale up or down the number of instances based on the number of inference requests (3.1) received.

In the context of the described embodiment, the cloud computing infrastructure may be Google Cloud infrastructure and the container orchestrator may be Cloud Run. This may allow the system to take advantage of a computing service that represents an execution environment, that is, a fully managed serverless platform for running stateless containerized applications (2.1, 3.3) without the need for managing the underlying infrastructure. More particularly, using Cloud Run for deploying containerized applications (2.1, 3.3) offers the ability to scale automatically said applications based on the traffic or load of the application. Cloud Run can also handle multiple requests simultaneously, offering a scalable and simple solution for deploying and managing containerized applications (2.1, 3.3).

As an alternative to a container orchestrator, the containerized platform may comprise a machine learning engine configured to execute:
- a training containerized application (2.1), to generate an inference model (2a);
- an inference containerized application (3.3), to produce an inference result (3.4);
   and to:
   - scale up or down a number of instances per containerized application (2.1, 3.3) to be executed and to allocate memory and CPU or GPU cloud computing **infrastructure's resources, for each containerized application instance;**
   - start the execution of a training containerized application instance; and
   - manage received inference requests and start the execution of at least one inference containerized application instance.

More particularly, the machine learning engine is configured to, for a training containerized application (2.1):
- **allocate memory cloud computing infrastructure's resources based on the size** of the training dataset (1b);
and, for an inference containerized application (3.3), to:
- scale up or down the number of instances based on the number of inference requests (3.1) received.

In this context, the cloud computing infrastructure may be Google Cloud infrastructure and the machine learning engine may be Vertex Al platform. This platform provides an optimized environment for executing machine learning tasks and offers the ability to allocate significant resources to the training process. More particularly, a solution may be developed focusing on using single task containers and input arguments to define the working directories, making it easy to define and manage a training process. Consequently, this approach allows for a more straightforward implementation, as the containerized applications (2.1, 3.3) may be designed to perform a single task and input arguments can be used to specify the working directories for the task, eliminating the need to manage said containerized applications (2.1, 3.3).

As will be clear to one skilled in the art, the solution described in present application should not be limited to the embodiments described herein, and a number of changes are possible which remain within the scope of the present application.

Of course, the preferred embodiments shown above are combinable, in the different possible forms, being herein avoided the repetition all such combinations.

## Claims

1. A data inference processing system comprising a containerization platform implemented on a cloud computing infrastructure and adapted to run containerized applications; the system comprises:
- a data ingestion unit (1), configured to receive raw training data (1a) from a first entity and to generate training datasets (1b) based on said raw training data (1a);
- a training unit (2), comprising a training containerized application (2.1), configured to execute a training container image (4a) programmed to train a model of a second entity, with a training dataset (1b) of the first entity, thereby generating an inference model (2a);
- an inference unit (3), comprising an input request module (3.2) for receiving inference requests (3.1), each request comprising input data (3a); and an inference containerized application (3.3), configured to execute an inference container image (4b) programmed to process input data (3a) according to an inference model (2a), thereby producing an inference result (3.4);
- a Collaborative Docker Registry (4) adapted to store training and inference container images (4a, 4b) and comprising a management computational engine configured to receive a training container image (4a) to be transmitted by the second entity and to store said training container image (4a) in the Collaborative Docker Registry (4);
wherein, a training container image (4a) comprises container image data including:
- a training script having as input arguments i.) an address to upload a training dataset (1b), and ii.) an address to where the inference model (2a) is to be stored; and
- executable code configured to execute container image data.

2. The system according to claim 1, wherein the data ingestion unit (1) comprises:
- an input module (1.1) adapted to receive raw training data (1a) from the first entity;
- a processing module (1.2) programmed to process raw training data (1a) in order to generate training datasets (1b);
- a training data storage module (1.3) comprising storage means adapted to store training datasets (1b);
and wherein,
the training containerized application (2.1) is configured to generate an inference model (2a) by executing a training container image (4a) programmed to train a model with a training dataset (1b) to be uploaded from the training data storage module (1.3).

3. The system according to claims 1 or 2, wherein the training unit (2) further comprises a trained model storage module (2.2), comprising storage means adapted to store inference models (2a); and wherein
the inference containerized application (3.3) is configured to produce the inference result (3.4) by executing an inference container image (4b) programmed to process input data (3a) according to an inference model (2a) to be uploaded from the trained model storage module (2.2).

4. The system according to claims 2 and 3, wherein the training data storage module (1.3) and the trained model storage module (2.2) are data storage structures comprised by multiple entries, each entry containing storage means and a respective entry address; and wherein,
an entry of the training data storage module (1.3) being adapted to store a training dataset (1b), and the respective entry address being usable to upload said training dataset (1b);
and
an entry of the trained model storage module (2.2) being adapted to store an inference model (2a), and the respective entry address being usable to store and upload said inference model (2a).

5. The system according to any of the previous claims,
wherein the training unit (2) further comprises a management module configured to trigger the execution of a training containerized application instance based on predefined schedule;
or according to any of the previous claims as dependent from claim 2,
wherein the training unit (2) further comprises a management module configured to trigger the execution of a training containerized application instance based on a predefined number of new training dataset (1b) entries in the training data storage module (1.3).

6. The system according to any of the previous claims as dependent from claim 2, wherein the inference unit (3) further comprises a data processing module (3.2.1);
and wherein,
the processing module (1.2) of the data ingestion unit (1) is configured to process raw training data (1a) using data mining algorithms, in order to process a set of key features;
and
the processing module (3.2.1) of the inference unit (3) is configured to process input data (3a) using data mining algorithms, in order to process the set of key features identified by the processing module (1.2) of the data ingestion unit (1), thereby generating refined input data (3b); the inference containerized application (3.3) being configured to produce the inference result (3.4) by executing an inference container image (4b) programmed to process refined input data (3b) according to an inference model (2a) to be uploaded from the trained model storage module (2.2);
and
optionally, the processing modules (1.2, 3.2.1) of the data ingestion and inference units (1, 3) are programmed to implement feature extraction or feature selection algorithms.

7. The system according to claim 6, wherein the processing module (1.2) of the data ingestion unit (1) is configured to expand a training dataset (1b) by incorporating the set of key features identified by the processing module (3.2.1) of the inference unit (3).

8. The system according to any of the previous claims, wherein the container image data of a training container image (4a) further includes an encryption function configured to encrypt the training container image (4a) using encryption keys managed by the second entity.

9. The system according to any of the previous claims as dependent from claim 4, wherein
the data storage structure is a directory service, and the entry address is a directory path; and
the system further comprising a computational agent programmed to assemble a container image (4a, 4b) based on a Dockerfile comprised by a set of instructions and input arguments;
and wherein,
the computational agent is programmed to assemble a training container image (4a) based on a training Dockerfile; and the training Dockerfile comprises:
- **an instruction declaring a training script as a Dockerfile's ENTRYPOINT;**
- the training script comprising the following input arguments:
- a directory path of the training data storage module (1.3) entry containing the training dataset (1b) to be uploaded; and
- a directory path of the trained model storage module (2.2) entry, where the inference model (2a) is to be stored.

10. The system according to claim 9, wherein the computational agent is programmed to assemble an inference container image (4b) based on an inference Dockerfile; and the inference Dockerfile comprises:
- **an instruction declaring as input arguments of a Dockerfile's Endpoint:**
- the input data contained in the inference request (3.1); and
- a directory path of the trained model storage module (2.2) entry containing the inference model (2a) to be uploaded;
- **an instruction declaring as an output argument of the Dockerfile's Endpoint:**
- the inference result (3.4).

11. The system according to any of the previous claims, further comprising a versioning unit, configured to assign a unique version identification code to each:
- inference model (2a) generated by a training containerized application instance of the training unit (2); and
- Training dataset (1b) generated by the data ingestion unit (1).

12. The system according to any of the previous claims, wherein the containerized platform further comprises a container orchestrator configured to deploy and scale:
- training containerized applications (2.1); and
- inference containerized applications (3.3);
and wherein,
the container orchestrator comprises a manager engine comprising processing means programmed to:
- set a number of instances per containerized application (2.1, 3.3) to be executed, preferably to set the maximum and minimum number of instances per containerized application (2.1, 3.3); and to allocate memory and CPU or GPU **cloud computing infrastructure's resources, for each containerized application** instance;
- start the execution of a training containerized application instance; and
- manage received inference requests and start the execution of at least one inference containerized application instance;
optionally, the cloud computing infrastructure is Google Cloud and the container orchestrator is Cloud Run.

13. The system according to claim 12, wherein the manager engine is configured to set, for a training containerized application (2.1):
- the maximum number of instances to 1 and the minimum number of instances to 0;
- CPU or GPU allocation to always allocated; and
- memory allocation based on the size of the training dataset (1b);
and the manager engine is configured to, for an inference containerized application (3.3):
- scale up or down the number of instances based on the number of inference requests (3.1) received.

14. The system according to any of the previous claims 1 to 11, wherein the containerized platform further comprises a machine learning engine configured to execute:
- a training containerized application (2.1), to generate an inference model (2a);
- an inference containerized application (3.3), to produce an inference result (3.4); and to:
- scale up or down a number of instances per containerized application (2.1, 3.3) to be executed and to allocate memory and CPU or GPU cloud computing **infrastructure's resources, for each containerized application instance;**
- start the execution of a training containerized application instance; and
- manage received inference requests and start the execution of at least one inference containerized application instance.
optionally, the cloud computing infrastructure is Google Cloud and the machine learning engine is Vertex Al.

15. The system according to claim 14, wherein the machine learning engine is configured to, for a training containerized application (2.1):
- **allocate memory cloud computing infrastructure's resources based on the size** of the training dataset (1b);
and, for an inference containerized application (3.3):
- scale up or down the number of instances based on the number of inference requests (3.1) received.
